# EUROPEAN PATENT APPLICATION

(11) **EP 4 509 873 A1**
(43) Date of publication of application: **19.02.2025**
(21) Application number: 22937165.3
(22) Date of filing: 21.09.2022
(51) Int. Cl.: G01S 7/497, G01S 7/48

(54) **METHOD FOR EVALUATING DEGREE OF TOWING POINT OF POINT CLOUD OF LASER RADAR, AND TEST APPARATUS AND LASER RADAR**

(30) Priority: 11.04.2022 CN 202210373244
(71) Applicant: Hesai Technology Co., Ltd., Shanghai 201815 (CN)
(72) Inventor: CHEN, Jinsong, Shanghai 201821 (CN); LIU, Kui, Shanghai 201821 (CN); KUANG, Songyang, Shanghai 201821 (CN); WANG, Weisong, Shanghai 201821 (CN); XIANG, Shaoqing, Shanghai 201821 (CN)
(74) Representative: Alatis
(86) International application number: PCT/CN2022/120079
(87) International publication number: WO 2023/197528

(57) **Abstract**

A method for evaluating degree of an interstitial point of point cloud of a LiDAR, and a tester apparatus, a laser LiDAR and a computer-readable storage medium. The method includes: building a tester apparatus, including a base, a first target object and a second target object; mounting a LiDAR on the base, to cause that light emitted by the LiDAR can be incident to the first target object and the second target object; emitting detection pulses to the first target object and the second target object of the tester apparatus by the LiDAR; receiving echo pulses reflected by the first target object and the second target object, and generating a point cloud on the basis of the echo pulses; determining whether an interstitial point exists in the point cloud; and when an interstitial point exists in the point cloud, increasing the distance between the first target object and the second target object; repeating the above steps until no interstitial point exists in the point cloud, and recording the distance between the first target object and the second target object at this moment, which recorded distance is used for representing the degree of the interstitial point of the point cloud of the LiDAR. The tester apparatus includes a base, a first target object and a second target object. The LiDAR includes an emitter unit, a receiver unit and a processor unit. The computer-readable storage medium includes a computer-executable instruction stored therein, wherein a method is implemented when the executable instruction is executed by a processor.

## Description

### TECHNICAL FIELD

This disclosure belongs to the field of LiDAR ("Light Detection And Ranging") technologies and, in particular, to a method and a tester apparatus for evaluating degree of an interstitial point of point cloud of a LiDAR, a LiDAR, and a computer-readable storage medium.

### BACKGROUND

A LiDAR is an active detector device that uses a laser as an emitting light source and uses photoelectric detection technologies. It can determine a distance to a target object by time difference between transmission and reception of a laser signal. In recent years, the LiDAR has been widely used in autonomous driving, traffic communication, unmanned aerial vehicles, intelligent robots, resource exploration, and other fields due to good detection performance, small size, and light weight.

An interstitial point (towing point), as one of common problems of the LiDAR, has always been concerned by users. Existence of the interstitial point can reduce quality of point cloud, affect user algorithm's determination of an obstacle, or result in disappearance of small objects. It has become a difficulty in indoor surveying and mapping. Therefore, reducing the interstitial point is one of the challenges that the LiDAR needs to overcome.

### SUMMARY

In view of one or more disadvantages in the existing technologies, this disclosure provides a method for evaluating degree of the interstitial point of point cloud of a LiDAR, including:
S101: building a tester apparatus, where the tester apparatus includes a base, a first target object, and a second target object, and distance between the first target object and the base is different from distance between the second target object and the base;
S102: mounting the LiDAR on the base, to cause that light emitted by the LiDAR at a predetermined orientation can be incident to the first target object and to the second target object successively;
S103: emitting detection pulses to the first target object and the second target object by the LiDAR;
S104: receiving echo pulses generated by reflection of the detection pulses by the first target object and the second target object, and generating the point cloud based on the echo pulses;
S105: determining whether an interstitial point exits in the point cloud; and
S106: increasing the distance between the first target object and the second target object when an interstitial point exits in the point cloud.

Based on an aspect of this disclosure, the method further includes: repeating the steps S103 to S106 until no interstitial point exits in the point cloud, and recording the distance between the first target object and the second target object at this time as the degree of the interstitial point of the point cloud of the LiDAR,
where the step S102 includes: changing the distances between the first target object and the base and between the second target object and the base, and the orientations of the first target object and the second target object to the base and of and the second target object to the base, to cause that the echo pulses generated by reflection of the detection pulses emitted from a laser emitter of the LiDAR by the first target object and the second target object are received by a same detector of the LiDAR.

Based on an aspect of this disclosure, the method further includes: repeating the steps S103 to S106 until no interstitial point exits in the point cloud; and representing the degree of the interstitial point of the point cloud of the LiDAR by a curve of the number of interstitial points relative to the distance between the first target object and the second target object,
where the first target object and the second target object have straight edges, and the first target object and the second target object are provided to cause that a horizontal detection pulse emitted by the LiDAR is substantially vertically incident to a position near an edge.

Based on an aspect of this disclosure, the step S101 includes: placing the first target object at a first distance to the base and placing the second target object at a second distance to the base, to cause that the first target object and the second target object partially overlap when viewed from the perspective of the LiDAR, where the first target object and the second target object are provided to cover a vertical field of view of the LiDAR.

Based on an aspect of this disclosure, the first target object and the second target object are both Lambertian with same reflectivity.

Based on an aspect of this disclosure, the step S103 includes: emitting, a detection pulse directly to an edge of the first target object, by the LiDAR, to cause that a part of the emitted light is incident to the first target object and another part of the emitted light is incident to the second target object.

Based on an aspect of this disclosure, the step S105 includes: displaying the point cloud through a point cloud visualization device to determine whether there is the interstitial point between the first target object and the second target object in the point cloud.

Based on an aspect of this disclosure, the first target object and the second target object are provided between a predetermined distance, where the first target object and the second target object are configured to be at initial positions where an interstitial point exits in the point cloud, and the step S106 includes: moving the second target object away from the base when it is determined that an interstitial point exits in the point cloud.

Based on an aspect of this disclosure, the method further includes: changing reflectivity of at least one of the first target object or the second target object, and repeating the steps S103 to S 106.

Based on an aspect of this disclosure, when no interstitial point exits in the point cloud, the distance between the first target object and the second target object is related to pulse width of the detection pulse emitted by the LiDAR, and the distance is not less than 100 cm.

Based on an aspect of this disclosure, the method further includes: determining that the degree of the interstitial point in the point cloud is high when the distance between the first target object and the second target object is greater than a first predetermined distance at which no interstitial point exits in the point cloud.

Based on an aspect of this disclosure, the method further includes: drawing a curve graph of the number of interstitial points based on the change of the distance between the first target object and the second target object.

This disclosure further provides a tester apparatus for evaluating degree of the interstitial point of point cloud of a LiDAR, including:
a base configured to install the LiDAR thereon;
a first target object vertically placed at a first distance from the base; and
a second vertically placed at a second distance from the base, where the second distance is greater than the first distance, and
where the first target object and the second target object partially overlap when viewed at a perspective from the LiDAR.

Based on an aspect of this disclosure, the tester apparatus further includes: a point cloud visualization device configured to communicate with the LiDAR to display the point cloud.

Based on an aspect of this disclosure, the tester apparatus further includes a controller configured to control positions of the first target object and the second target object to change the distance between the first target object and the second target object based on whether an interstitial point exits in the point cloud or based on a user input.

Based on an aspect of this disclosure, the tester apparatus further includes a first guide rail and a second guide rail, where the first target object is slidably provided on the first guide rail and the second target object is slidably provided on the second guide rail.

Based on an aspect of this disclosure, the distances between the first target object \t and the base and between the second target object and the base, and the orientations of the first target object to the base and of the second target object to the base, are provided so that echo pulses, of detection pulses emitted from a laser emitter of the LiDAR, reflected by the first target object and the second target object are received by a same detector of the LiDAR.

Based on an aspect of this disclosure, the first target object and the second target object have straight edges, and the first target object and the second target object are provided so that a horizontal detection pulse emitted by the LiDAR is substantially vertically incident to a position near an edge, and the first target object and the second target object are provided to cover a vertical field of view of the LiDAR.

This disclosure further provides a LiDAR, including:
an emitter unit configured to emit a detection pulse;
a receiver unit configured to receive an echo pulse generated by reflection of the detection pulse incident to an obstacle; and
a processor unit configured to generate point cloud data based on the echo pulse, and evaluate degree of the interstitial point of the point cloud data, where an interstitial point is a non-existent point formed between front and rear real obstacles, and the degree of the interstitial point is characterized using interstitial point disappearance distance.

Based on an aspect of this disclosure, the interstitial point disappearance distance is related to pulse width of the detection pulse emitted by the LiDAR, and the interstitial point disappearance distance is not less than 100 cm.

Based on an aspect of this disclosure, the processor unit is further configured to package the degree of the interstitial point to the point cloud data, then output the degree of the interstitial point to an external device to assist the external device in determining quality of the point cloud data, and the external device includes a vehicle.

Based on an aspect of this disclosure, the processor unit is further configured to evaluate confidence of the point cloud data based on the degree of the interstitial point, then output the confidence to the external device to assist the external device in determining use of the point cloud data, and the external device includes the vehicle.

This disclosure further provides a computer-readable storage medium, which includes computer-executable instructions stored thereon, where when the executable instructions are executed by a processor, the method for evaluating the degree of the interstitial point of the point cloud of the LiDAR as described above is implemented.

By using technical solutions of this disclosure, the degree of the interstitial point of the LiDAR produced by any manufacturer can be evaluated intuitively and uniformly to evaluate the confidence of the point cloud of the LiDAR, and then evaluate performance of the LiDAR, thereby assisting the external device in determining the use of the point cloud data, which facilitates improving of customer experience and standardizing development of LiDAR industry.

### BRIEF DESCRIPTION OF THE DRAWINGS

Drawings are provided for further understanding of this disclosure and form a part of this disclosure, and together with embodiments of this disclosure, serve to explain this disclosure and do not form limitations on this disclosure. In the drawings:
Fig. 1A shows a schematic diagram of a principle for an interstitial point generation.
Fig. 1B shows a schematic diagram of an echo for an interstitial point generation.
Fig. 1C shows a schematic diagram of point cloud of a LiDAR for interstitial points generation.
Fig. 2A shows a schematic diagram of point cloud of a LiDAR when the distance between front and rear obstacles is large.
Fig. 2B shows a schematic diagram of point cloud of a LiDAR when the distance between front and rear obstacles is small.
Fig. 2C shows a schematic diagram of the number of interstitial points varying with distance between front and rear obstacles.
Fig. 3 shows a schematic diagram of a principle of determining theoretical interstitial point disappearance distance.
Fig. 4 shows a flowchart of a method for evaluating degree of the interstitial point of point cloud of a LiDAR, provided in an embodiment of this disclosure.
Fig. 5 shows a schematic diagram of a tester apparatus for evaluating degree of the interstitial point of point cloud of a LiDAR, provided in an embodiment of this disclosure.
Figs. 6a and 6b show schematic diagrams of a LiDAR, provided in an embodiment of this disclosure.

### DETAILED DESCRIPTION

In the following, merely some example embodiments are briefly described. As can be understood by those skilled in the art, described embodiments can be modified in various ways without departing from the spirit or scope of this disclosure. Accordingly, drawings and description are considered to be exemplary rather than restrictive in nature.

In the description of this disclosure, it should be understood that an orientation or positional relationship indicated by terms such as "center," "longitudinal," "transverse," "length," "width," "thickness," "upper," "lower," "front," "rear," "left," "right," "vertical," "horizontal," "top," "bottom," "inner," "outer," "clockwise," "counterclockwise," is based on the orientation or positional relationship shown in drawings, and are merely for convenience of describing this disclosure and simplifying the description, rather than indicate or imply that an apparatus or an element referred to must have a specific orientation, be configured and operated in a specific orientation, and therefore cannot be understood as a limitation on this disclosure. In addition, terms "first" and "second" are merely for descriptive purposes and cannot be understood as indicating or implying relative importance, or implicitly indicating the number of indicated technical features. Therefore, features limited with "first" and "second" can explicitly or implicitly include one or more features. In the description of this disclosure, "multiple" means two or more, unless otherwise specifically limited.

In the description of this disclosure, it should also be noted that unless otherwise specified and limited, terms "installing/mounting", "coupling," and "connecting" should be understood in a broad sense. For example, it can be fixedly connecting, detachably connecting, or integrally connecting; it can be mechanically connecting or electrically connecting, or can be communicated with each; and it can be directly connecting or indirectly connecting through an intermediate medium, or it can be communication within two elements or an interaction relationship between two elements. For those ordinary skilled in the art, specific meanings of the above terms in this disclosure can be understood based on a specific situation.

In this disclosure, unless otherwise specified and limited, a first feature being located "above" or "below" a second feature can involve direct contact between the first feature and second feature, or can involve that the first feature and second feature are not in direct contact with each other but in contact through additional features between them. Moreover, the first feature being located "over," "above," or "on" the second feature can involve that the first feature is directly above and obliquely above the second feature, or merely represent that the level of the first feature is higher than that of the second feature. The first feature being located "under," "below," or "beneath" the second feature can involve that the first feature is directly below and obliquely below the second feature, or merely represent that the level of the first feature is lower than that of the second feature.

The following disclosure provides many different embodiments or examples for implementing different structures of this disclosure. To simplify this disclosure, components and settings of specific examples are described below. Of course, they are merely examples and are not intended to limit this disclosure. In addition, at least one of reference numerals or reference letters can be repeated in different examples in this disclosure, and this repetition is for a purpose of simplicity and clarity, and does not in itself represent a relationship between at least one of various implementation manners or settings discussed. In addition, this disclosure provides examples of various specific processes and materials, but at least one of application of other processes or use of other materials can be conceived by those ordinary skilled in the art.

Preferred embodiments of this disclosure are described below with reference to drawings. It should be understood that the preferred embodiments described herein are merely intended to illustrate and explain this disclosure, but not to limit this disclosure.

Before describing in detail a method for evaluating degree of an interstitial point of point cloud of a LiDAR of this disclosure, a formation principle of the interstitial point can be described firstly.

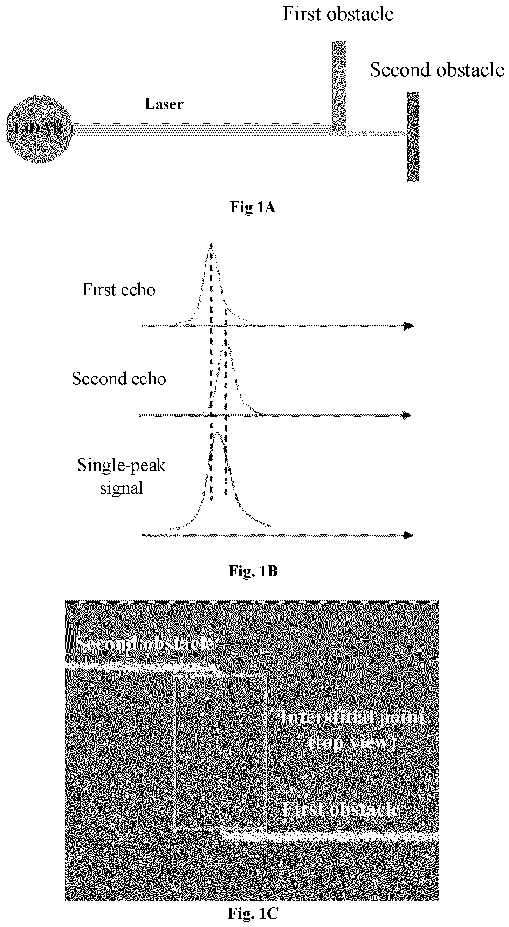

Fig. 1A shows a schematic diagram of a principle for an interstitial point generation, Fig. 1B shows a schematic diagram of an echo that can generate an interstitial point, and Fig. 1C shows point cloud of a LiDAR that includes a large number of interstitial points. As shown in Fig. 1A, a detection beam emitted by the LiDAR has a certain divergence angle, and thus a cross-sectional area of the detection beam can increase with increase in propagation distance. In detecting front and rear obstacles that are close to each other, a light spot emitted by the LiDAR can be split into two parts, one part of the light spot is irradiated on an edge of a first reflector, and the other part of the light spot is irradiated on a second reflector behind. As shown in Fig. 1A, the first obstacle and the second obstacle are located at a same detection orientation of a LiDAR. For example, they are both in a direction at a horizontal angle 32° from the LiDAR. Distance between the first obstacle and the LiDAR is a first distance, and distance between the second obstacle and the LiDAR is a second distance. The first distance is smaller than the second distance, but a difference between the two distances is very small. When the detection beam emitted by the LiDAR detects in the direction at the horizontal angle 32°, one part of the detection beam is irradiated on an edge of the first obstacle located in front and a diffuse reflection occurs, while some of diffuse reflected echoes return to the LiDAR, that is, a first echo. The other part of the detection beam is irradiated on the second obstacle located behind and a diffuse reflection occurs, while some of the diffuse reflected echoes return to the LiDAR, that is, a second echo, as shown in Fig. 1B. Both the first echo and the second echo can be received by a photodetector of the LiDAR and converted into electrical signals.

As shown in Fig. 1B, because the first obstacle and the second obstacle are relatively close to each other, the second echo can be relatively close to the first echo on a time axis, and thus an echo processor module of the LiDAR can be not able to distinguish the second echo from the first echo, which further results in that the first echo signal and the second echo signal are constructed as one echo signal, that is, a single-peak signal shown in a third subgraph in Fig. 1B. Both a peak and a leading edge of the single-peak signal are located between the first echo and the second echo. Therefore, when calculating distance of the obstacle by using a time point of the peak or the leading edge of the single-peak signal and then deducing a position of the obstacle based on the distance, because the distance of the obstacle determined by the calculation can be between values of the first distance and the second distance, the LiDAR can assume that the obstacle existing at this orientation (e.g., at the horizontal angle 32°) is located between the first obstacle and the second obstacle, thereby forming points between the first obstacle and the second obstacle in the point cloud that should not exist or corresponding to no real obstacle. These points that should not exist are interstitial points, as shown by points in a rectangular box of Fig. 1C. As can be seen from Fig. 1A, there is no other object between the first obstacle and the second obstacle, the interstitial points are thus not points generated by a real obstacle, but noise points. However, existence of the interstitial point can cause the LiDAR and the data processor apparatus to mistakenly believe that there are other obstacles between the first obstacle and the second obstacle, thereby affecting detection accuracy of the LiDAR.

It can be seen from the above that the interstitial points are easily formed between the front and rear obstacles that are relatively close to each other. Generation of the interstitial point has a certain relationship with the distance between the first obstacle and the second obstacle. To know a relationship between the interstitial point and the distance in more detail, applicants of this disclosure performed a lot of experiments, which are described in detail below.

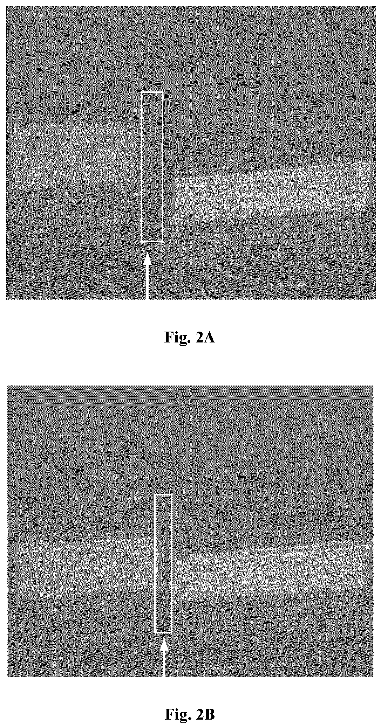

Fig. 2A shows a schematic diagram of point cloud of a LiDAR when distance between front and rear obstacles is d1 (which is large and exceeds a certain threshold, e.g., exceeds 5 m). As shown in Fig. 2A, when the distance between the front and rear obstacles is d1, no interstitial point exits between the front and rear obstacles in the point cloud of the LiDAR, or the number of interstitial points is small, or interstitial points account for a small proportion in whole point cloud data. Fig. 2B shows a schematic diagram of point cloud of a LiDAR when distance d2 between the front and rear obstacles is smaller than d1. As shown in Fig. 2B, when the distance d2 between the front and rear obstacles is smaller than d1, there are a large number of interstitial points between the front and rear obstacles in the point cloud of the LiDAR, as shown by points in a rectangular box.

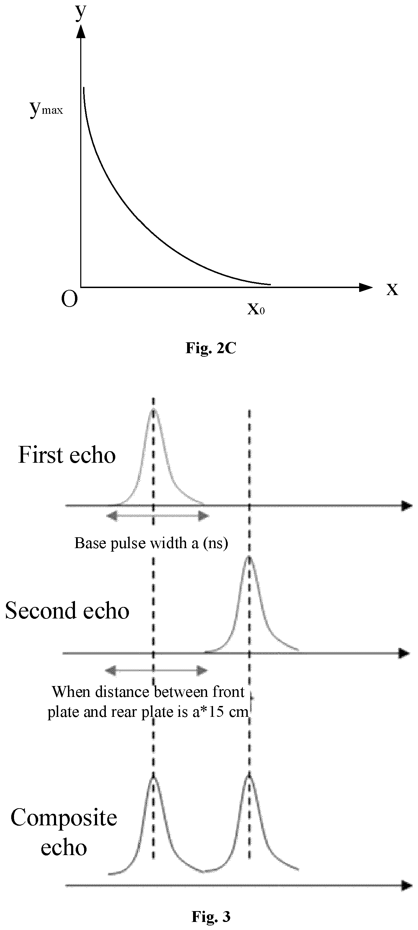

Fig. 2C shows a schematic diagram of change in the number of interstitial points with distance between front and rear obstacles. As shown in Fig. 2C, an x-axis represents the distance between the front and rear obstacles, and a y-axis represents the number of interstitial points. The number of interstitial points is substantially negatively correlated with the distance between the front and rear obstacles. When the distance between the front and rear obstacles approaches zero, the number of interstitial points is very large, which is substantially close to a maximum value yₘₐₓ. However, as the distance between the front and rear obstacles increases, the number of interstitial points gradually decreases, and when the distance between the front and rear obstacles increases to a certain extent, that is, x = x₀, the interstitial point just completely disappears, that is, y = 0, and when the distance between the front and rear obstacles continues to increase, the interstitial point no longer appears. It can be seen that x₀ is critical distance between the front and rear obstacles, that is, x₀ is the distance between the front and rear obstacles when the interstitial point just completely disappears or just occurs, and x₀ is simply called interstitial point disappearance distance. A changing law of the number y of interstitial points with the distance x between obstacles is summarized as follows: when x < x₀, y > 0; and when x ≥ x₀, y ≈ 0, and thus the applicants found that the interstitial point disappearance distance can be used to evaluate the degree of the interstitial point of the LiDAR. It can be explained below how to determine the interstitial point disappearance distance.

As described above, the interstitial point is caused by a fact that the first echo and the second echo are too close to each other on the time axis to be distinguished. Whether the second echo and the first echo can be separated by a time interval is related not only to the distance between the first obstacle and the second obstacle, but also to pulse width of a detection pulse emitted by the LiDAR. In the LiDAR, the pulse width of an echo signal is usually positively correlated with width of the emitted detection pulse, and thus the greater the width of the detection pulse, the greater the pulse width of the echo signal. Therefore, by reducing the width of the detection pulse, the pulse width of the echo signal can be accordingly reduced, to cause that an overlapping part between the second echo and the first echo can be reduced to be more easily distinguished, and an effect of reducing the interstitial point can also be realized.

Based on above experiments, the applicants of this disclosure analyzed a principle in generation and disappearance of the interstitial points. Fig. 3 shows a schematic diagram of a principle of determining a theoretical interstitial point disappearance distance. As shown in Fig. 3, it is assumed that base pulse width of the detection pulse emitted by the laser of the LiDAR is a (ns), when the distance between the front and rear obstacles located in a same direction of the LiDAR is greater than distance of a* 15 m/ns (with physical meaning that with speed of light of 3× 10⁸ m/s, time of 1 ns corresponds to a round-trip distance of 15 cm), a leading edge of the second echo is no longer affected by the first echo, that is, the first echo and the second echo can be distinguished from each other, and the interstitial point can theoretically completely disappear. When the first echo and the second echo are not affected by each other, they are not analyzed and calculated by a processor unit based on a signal generated by superposition of the two, to cause that the interstitial point can completely disappear, thereby improving the detection accuracy of the LiDAR. Therefore, the applicants of this disclosure proposed that performance of the LiDAR can be evaluated by the degree of the interstitial point, and the degree of the interstitial point can be characterized by an interstitial point disappearance distance. If the interstitial point disappearance distance is less than a certain threshold or the interstitial point disappearance distance is smaller, it represents that the degree of the interstitial point of the LiDAR is relatively low and the performance of the LiDAR is good. On the contrary, if the interstitial point disappearance distance is relatively large, it represents that the degree of the interstitial point of the LiDAR is relatively high, and the performance of the LiDAR is relatively poor.

When using the LiDAR for three-dimensional environment detection in an actual environment, it is easy to be interfered by various factors, such as an influence of ambient light. In addition, there are many objects in the actual environment, it is difficult to accurately distinguish a point in the point cloud as an interstitial point or a real point, and thus it is impossible to objectively and accurately determine information and parameters of the LiDAR about the degree of the interstitial point of the point cloud. In this disclosure, a tester apparatus and a testing method that can be used in a laboratory are provided, which can help to eliminate other interferences and accurately reflect interstitial point performance of the LiDAR.

To evaluate the degree of the interstitial point of the point cloud of the LiDAR, a method is provided in this disclosure, in which a first target object and a second target object are provided at an orientation for detection by the LiDAR, with small distance between the two, to cause that a same light spot emitted by the LiDAR can be incident to the first target object and the second target object, the point cloud is generated based on the echo pulse. When an interstitial point exits in the point cloud, increase the distance between the first target object and the second target object. The above operation is repeated, until no interstitial point exits in the point cloud, and the distance between the first target object and the second target object at this time is recorded to characterize the degree of the interstitial point of the point cloud of the LiDAR. Description can be made in detail below.

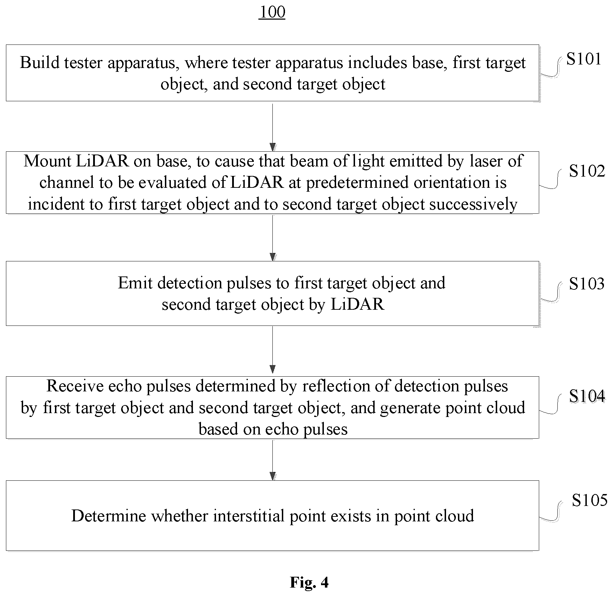

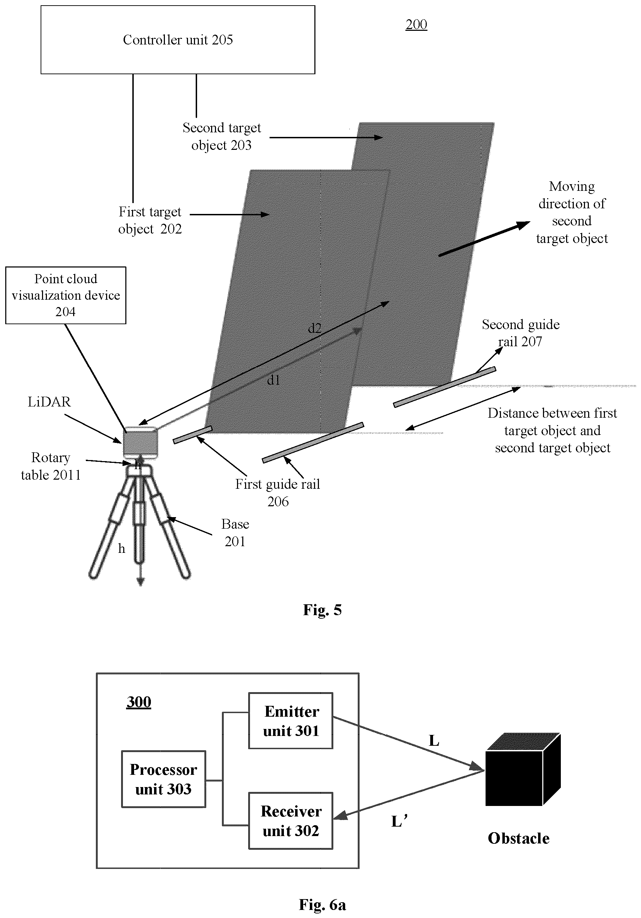

Fig. 4 shows a flowchart of a method 100 for evaluating degree of the interstitial point of point cloud of a LiDAR, provided in an embodiment of this disclosure. Fig. 5 shows a schematic diagram of a tester apparatus 200 for evaluating degree of the interstitial point of point cloud of a LiDAR, provided in an embodiment of this disclosure. Respective steps of the method 100 can be described in detail with reference to Figs. 4 and 5.

At the step S101, a tester apparatus is built, and the tester apparatus includes a base, a first target object, and a second target object, where distance between the first target object and the base is different from distance between the second target object and the base. The first target object and the second target object are preferably flat plates.

At the step S102, the LiDAR is installed on the base, to cause that a beam of light emitted by a laser of a channel to be evaluated of the LiDAR at a predetermined orientation can be incident to the first target object and the second target object successively.

It should be noted that the first target object and the second target object are located at an orientation of a certain detection of the LiDAR. When the LiDAR detects obstacle information in an environment at this orientation, a same detection beam emitted can be incident to either the first target object or the second target object. In other words, one part of a light spot of a certain detection beam is incident to the first target object and another part of the light spot is incident to the second target object. In fact, a size of the light spot of the detection beam can be estimated by a divergence angle of the detection beam and distance D between the laser and the first target object. Specifically, for example, if the divergence angle of the detection beam is x, a radius of the light spot of the detection beam incident to the first target object is y ≈ x × D/2. Preferably, relative positions of the first target object, the second target object, and the LiDAR are provided to cause half of the light spot to be incident to the first target object and the other half of the light spot to be incident to the second target object.

As shown in Fig. 5, the tester apparatus 200 includes a base 201, a first target object 202, and a second target object 203, where the base 201 has a certain height, which can be configured to install the LiDAR. Since the first target object 202 and the second target object 203 generally have a certain size, and the heights of the first target object 202 and the second target object 203 may be larger than that of the LiDAR. To make full use of the target objects, the LiDAR can be mounted on the base 201 and then raised by the base 201, to cause that a detection beam emitted by a channel currently being detected by the LiDAR can be incident closer to a middle position of the target object. Preferably, a rotary table 2011 with a predetermined height is installed on the base 201 for installing the LiDAR thereon, and the rotary table 2011 can rotate to further drive and change an angle of the LiDAR in a horizontal plane and an angle of the LiDAR in a vertical plane, thereby detecting the interstitial points for different channels of the LiDAR in turn. In some LiDARs, lasers are arranged in multiple columns, and multiple lasers in a column correspond to different vertical detection angles. For this type of LiDAR, it is preferable to drive one column of lasers at a time. For example, by rotating the LiDAR on the rotary table 2011, an emitting direction of a column of lasers to be tested is close to a junction of the first target object and the second target object, and then the column of lasers is driven to emit detection pulses and receive echo pulses. In addition, by rotating the LiDAR through the rotary table, the column of lasers are continuously driven to emit the detection pulses and receive the echo pulses during rotation, to determine the point cloud in a certain range near the junction. In embodiments without a rotary table, a point cloud of the LiDAR in a certain range near the junction between the first target object and the second target object can be determined through rotary scanning of the LiDAR itself.

The base 201 is substantially provided in front of the first target object 202 and the second target object 203, and the height thereof is generally determined to be half of the height of the first target object 202 or the second target object 203, to cause the LiDAR to be substantially located at half of the height of the first target object 202 and the second target object 203. The first target object 202 and the second target object 203 can be determined to be target object plates, and can be in a form of Lambertian with a same reflectivity of a predetermined size. Edges of the target object plates are straight to simulate the front and rear obstacles detected by the LiDAR. The first target object 202 is placed at a first distance d1 from the base 201 (horizontally), and the first distance d1 can be determined to cause that the first target object can cover a vertical field of view of the LiDAR, for example, with a horizontal distance determined to be 2 m ± 2 cm. The second target object 203 is placed at a second distance d2 from the base 201 (horizontally), where the second distance d2 is greater than the first distance d1. When viewing from a normal incident angle at a certain orientation of the LiDAR, the first target object 202 and the second target object 203 partially overlap, to cause a part of a certain light spot of light emitted by the LiDAR when detecting at a certain orientation to be incident to the first target object 202, and another part of the light spot to be incident to the second target object 203.

The first target object 202 and the second target object 203 are separated by a predetermined distance, which can typically be determined as a small value, such as 5 cm, 10 cm, 20 cm, 30 cm, or the like, to cause the interstitial point to exist in the determined point cloud when the first target object 202 and the second target object 203 are initially scanned using the LiDAR. Determination of the predetermined distance depends on many factors, including, such as parameters of the LiDAR (e.g., the width of the detection pulse of the LiDAR) and detection distance (the first distance d1). This disclosure is not limited to specific predetermined distance, as long as the interstitial point exists in initial detected point cloud of the LiDAR.

The tester apparatus 200 described above can be used in different ways to measure the degree of the interstitial point of the LiDAR. Based on an embodiment of this disclosure, detection can be performed by channel to determine the point cloud of the channel to determine the interstitial point in the point cloud. Based on another embodiment of this disclosure, the detection can be performed by grouping multiple channels together to determine the point cloud of this group of channels. Based on yet another embodiment of this disclosure, the LiDAR can normally work as in a real environment, and the detection is performed within all of fields of view to determine complete point cloud of the LiDAR for a surrounding scenario. Random distribution of light spots on the first target object and the second target object is realized through multiple rotations, to cause a measurement result to be more reliable. Such evaluation process is relatively efficient.

Based on a preferred embodiment of this disclosure, the base 201 includes multiple legs, such as a tripod with a changeable height, to avoid possible interstitial points in the point cloud of the LiDAR due to an influence of external jitter. Optionally, the height of the first target object 202 and the second target object 203 can be determined to be 1.9 m and the width of the first target object 202 and the second target object 203 can be determined to 1.2 m, respectively. Those skilled in the art can choose other sizes, as long as the size of the target object, the distance to the LiDAR, and the field of view are ensured to be matched with each other, to cause that the target object can at least cover the field of view of the LiDAR, that is, detection beams emitted from both ends of the LiDAR in a vertical direction can fall on a target object plate, or an opening angle formed by uppermost and lowermost connecting lines between the LiDAR and the target object plate is not less than the vertical field of view of the LiDAR, to complete evaluation of the degree of the interstitial point of the point cloud in the whole field of view and whole channel of the LiDAR. The reflectivity of two target object plates can be the same, both at 90%. The height of the rotary table 2011 on the base 201 is determined to be 1 m. The first target object 202 is placed 2 m away from the base 201. The second target object 203 is placed 2.3 m away from the base 201, standing next to the LiDAR, and when viewing at a certain orientation, it can be seen that the first target object 202 and the second target object 203 partially overlap, and a laser of the LiDAR face an edge of the first target object. It is reasonable to infer that by building such a scenario, a certain light spot emitted can be respectively incident to the first target object and the second target object when the LiDAR performs environment detection at this orientation.

At the step S103, detection pulses are emitted to the first target object and the second target object of the tester apparatus through the LiDAR. At the step S104, echo pulses generated by reflection of the detection pulses by the first target object and the second target object are received, and the point cloud is generated based on the echo pulses.

With reference to Fig. 5, when the LiDAR performs the detection, the detection pulse is emitted towards the edge of the first target object 202 at a certain orientation, and a part of a certain light spot can be irradiated on the edge of the first target object 202 located in front and a diffuse reflection occurs, and some of the diffuse reflected echoes return to the LiDAR, that is, the first echo. Some other part of the light spot is irradiated on the second target object 203 located behind and a diffuse reflection occurs, and some of the diffuse reflected echoes return to the LiDAR, that is, the second echo. Both the first echo and the second echo can be received by a photodetector of the LiDAR and converted into the electrical signals, and the point cloud can be generated after further signal processing.

At the step S105, it is determined whether an interstitial point exists in the point cloud.

In the point cloud of the LiDAR, there are differences in signal waveform or the like between the interstitial point and a normal point, and it can be determined whether the interstitial point exists in the point cloud based on these differences. A method for identifying an interstitial point is disclosed in a Chinese patent application No. 202010425439.4 filed by the applicants on May 19, 2020, and content of which is incorporated herein by reference in its entirety. This disclosure is not limited to a specific method for identifying an interstitial point, as long as it can identify whether the interstitial point exists in the point cloud at the step S105. Based on a preferred embodiment of this disclosure, at the step S105, identified interstitial points can be counted.

Based on a preferred embodiment of this disclosure, continuously referring to Fig. 5, the tester apparatus 200 further includes a point cloud visualization device 204. The point cloud visualization device 204 is configured to communicate with the LiDAR to display the point cloud generated by the LiDAR. It can be determined very intuitively based on the point cloud whether an interstitial point exists between the first target object 202 and the second target object 203 in the point cloud, to evaluate and determine a situation of the interstitial point in the point cloud of the LiDAR. The point cloud visualization device 204 can be a mobile phone, a computer, a notebook, a pad, or the like. A specific type of the point cloud visualization device 204 is not limited in this disclosure. The point cloud visualization device 204 can be installed with software or APP for identifying the interstitial point in the point cloud. For example, by processing an image of the point cloud, outlines of points corresponding to the first target object 202 and the second target object 203 can be identified, and then it can be determined whether other points exist between the first target object 202 and the second target object 203 (as shown in Fig. 2B), that is, it can be determined whether the interstitial point exists in the point cloud.

At the step S106, distance between the first target object 202 and the second target object 203 is increased when the interstitial point exists in the point cloud. In this disclosure, the distance between the first target object 202 and the second target object 203 includes a distance between the two in a normal direction.

Based on a preferred embodiment of this disclosure, the method further includes: repeating the steps S103 to S106 until no interstitial point exists in the point cloud, and recording the distance between the first target object and the second target object at this time to characterize the degree of the interstitial point of the point cloud of the LiDAR.

Based on a preferred embodiment of this disclosure, the step S102 includes: distance between the first target object and the base, orientation of the first target object to the base, distance between the second target object and the base, and orientation of the second target object to the base are changed, to cause the echo pulses generated by reflection of the beam of light by the first target object and the second target object to be received by a detector of the channel to be evaluated.

In addition, this disclosure is not limited to characterizing the degree of the interstitial point of the point cloud of the LiDAR by the interstitial point disappearance distance. For example, the degree of the interstitial point of the point cloud of the LiDAR also can be characterized by a curve of the number of interstitial points relative to the distance between the first target object and the second target object.

Based on a preferred embodiment of this disclosure, the first target object and the second target object have straight edges, to cause that the detection pulse from the LiDAR can be more fully reflected, and the first target object and the second target object are provided to cause a horizontal detection pulse emitted by the LiDAR to be substantially vertically incident to a position near an edge.

As described above, when the distance between the first target object 202 and the second target object 203 increases, the number of interstitial points in the point cloud of the LiDAR gradually decreases. In this disclosure, the distance between the first target object 202 and the second target object 203 is increased and the tests are repeated until no interstitial point exists in the point cloud, at which time the distance between the first target object 202 and the second target object 203 is the interstitial point disappearance distance, which is configured to characterize the degree of the interstitial point of the point cloud of the LiDAR.

Based on a preferred embodiment of this disclosure, continuously referring to Fig. 5, to realize an automatic test, the tester apparatus 200 can further include a first guide rail 206, a second guide rail 207, and a controller unit 205. The first target object 202 is slidably provided on the first guide rail 206 to change a first distance between the first target object and the LiDAR. The second target object 203 is slidably provided on the second guide rail 207. The controller unit 205 is configured to automatically control a position of the first target object 202 on the first guide rail 206 and a position of the second target object 203 on the second guide rail 207, respectively, to facilitate changing of the distance between the first target object 202 and the second target object 203. Based on a preferred embodiment of this disclosure, the controller unit 205 communicates with the point cloud visualization device 204 to change the distance between the first target object 202 and the second target object 203 based on whether the interstitial point exists in the point cloud. The controller unit 205 can also be changed based on a user input. The controller unit 205 can be a mobile phone, a computer, a notebook, a pad, or the like, or can be a key remote controller. The controller unit 205 is not limited to a specific type in this disclosure.

Specifically, based on a preferred embodiment of this disclosure, when the interstitial point exists in the point cloud displayed by the point cloud visualization device 204, the second object 203 is controlled to move in a direction away from the base 201 on the second guide rail 207 until no interstitial point exists in the point cloud. The distance between the first object 202 and the second object 203 at this time is recorded as a first interstitial point disappearance distance x1. In addition, in this disclosure, an expression "no interstitial point exists in the point cloud" can also include a case that the number of interstitial points in the point cloud is less than a threshold.

The interstitial point disappearance distance is determined through the above steps S101-106, which has a certain relationship with the reflectivity of the first target object 202 and the second target object 203. Based on an embodiment of this disclosure, the method 100 further includes: changing a reflectivity of at least one of the first target object or the second target object and repeating the steps S103 to S106. For example, by replacing the target object with a different reflectivity as at least one of the first target object or the second target object, the above steps are repeated to determine a corresponding interstitial point disappearance distance under a new reflectivity combination.

Because a combination of different reflectivities of the first target object and the second target object can affect the interstitial point, based on a preferred embodiment of this disclosure, Lambertian with the same size, such as with the height of 1.9 m, the width of 1.2 m, and the reflectivity of 100%, can be selected as the first target object 202, and Lambertian with the height of 1.9 m, the width of 1.2 m and the reflectivity of 90% is selected as the second object 203. The above steps S103 to S106 are repeated until no interstitial point exists in the point cloud. The distance between the first object 202 and the second object 203 at this time is recorded as a second interstitial point disappearance distance x2. Similarly again, Lambertian with the same size, such as with the height of 1.9 m, the width of 1.2 m, and the reflectivity of 90%, can be selected as the first target object 202, and Lambertian with the height of 1.9 m, the width of 1.2 m and the reflectivity of almost 100% is selected as the second object 203, and the above steps S103 to S106 are repeated until no interstitial point exists in the point cloud. The distance between the first object 202 and the second object 203 at this time is recorded as a third interstitial point disappearance distance x3. Preferably, measurement is performed at least three times, and an average value of the first interstitial point disappearance distance x1, the second interstitial point disappearance distance x2, and the third interstitial point disappearance distance x3 is determined, and the average value is taken as the interstitial point disappearance distance of the LiDAR, to characterize the degree of the interstitial point of the point cloud of the LiDAR, thereby improving accuracy of determining the interstitial point disappearance distance of the LiDAR.

When no interstitial point exists in the point cloud, and the interstitial point disappearance distance is greater than a first predetermined distance (e.g., 150 cm), it is determined that the degree of the interstitial point of the LiDAR is high. Based on the degree of the interstitial point, confidence of the point cloud data of the LiDAR can be further determined. For example, if the interstitial point disappearance distance of the LiDAR is 150 cm, and if the LiDAR detects two objects with a distance less than 50 cm apart in front of and behind each other, it is considered that the confidence of this point cloud is poor.

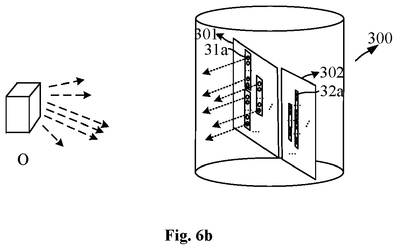

This disclosure further relates to a LiDAR 300. Figs. 6a and 6b show schematic diagrams of a LiDAR, provided in an embodiment of this disclosure. As shown in Figs. 6a and 6b, the LiDAR 300 includes: an emitter unit 301 including multiple lasers 31a, configured to emit a detection pulse;
a receiver unit 302 including multiple detectors 32a, configured to receive an echo pulse generated by reflection of the detection pulse incident to an obstacle, where at least one laser and at least one detector form a detection channel, all of multiple lasers and multiple detectors form multiple detection channels, and a laser and a detector in a same detection channel overlap at least partially in a field of view; and
a processor unit 303, configured to generate point cloud data based on the echo pulse of each detection channel, and evaluate a degree of the interstitial point of the point cloud data with the detection channel as a unit until the evaluation of all of multiple detection channels is completed. The interstitial point is a non-existent point formed between front and rear real obstacles and the degree of the interstitial point is characterized by the interstitial point disappearance distance.

In detail, lasers 31a can be arranged in multiple columns, all of which are attached to a flat panel. Specifically, the lasers 31a can be vertical cavity surface emitting lasers ("VCSELs"). As shown in Fig. 6b, light emitted by the lasers 31a is emitted perpendicular to the flat panel. After being shaped by an emitting lens group (not shown), it is emitted from the LiDAR 300 to different directions to cover a vertical field of view ("FOV") of the LiDAR.

One or more detectors 32a in a receiver unit 302 can be specifically SPAD or SiPM, and the detectors 32 can be all attached to the flat plate and arranged in the multiple columns corresponding to arrangement of the lasers 31a, to form the multiple detection channels with the lasers 31a. Among them, each detection channel can include one laser and one or more detectors, or it can include one or more lasers and one detector. The laser and the detector of each detection channel have a same vertical sub-FOV. That is, after optical signals emitted by the lasers in the same detection channel are reflected by the obstacle and return to the LiDAR, the optical signals can be received by the detectors in the same detection channel. Sub-fields of view of all detection channels together form scanning of the whole LiDAR in a vertical FOV The whole LiDAR can be driven by a motor and other devices to rotate as a whole, or the light emitted by the lasers can be deflected by a micro-motion device such as a rotating mirror, a micro electromechanical system ("MEMS"), or a liquid crystal to further realize the scanning of the radar in a horizontal FOV, thereby forming a scanning point cloud map with a certain horizontal FOV and a vertical FOV

For the detectors 32a located in one detection channel, they can start to work under control of a controller module 303 to receive echo signals generated when the optical signals emitted from the corresponding lasers 31a in the detection channel are reflected by external obstacles and return to the LiDAR.

For the detectors 32a located in one detection channel, they can always be in a state of receiving the optical signals under control of the controller module 303, and then signals received merely within a flight window of the detection channel where the detectors 32a are located are read out as the echo signal and further processed to generate the point cloud data. Among them, the interstitial point disappearance distance is related to the pulse width of the detection pulse emitted by the LiDAR, and the interstitial point disappearance distance is not less than 100 cm.

Based on a preferred embodiment of this disclosure, the processor unit 303 is further configured to evaluate the confidence of the point cloud data based on the degree of the interstitial point, package the degree of the interstitial point to the point cloud data, then output the confidence and the degree of the interstitial point to an external device (e.g., an automatic driving system of a vehicle) to assist the external device in determining quality of the point cloud data and determining use of the point cloud data.

Based on a preferred embodiment of this disclosure, if it is measured based on the above method 100 that the interstitial point disappearance distance of the LiDAR is 150 cm, and if the LiDAR detects two objects with a distance less than 50 cm apart in front of and behind each other, it is considered that the confidence of this point cloud is poor. The processor unit 303 packages the degree of the interstitial point to the point cloud data, and output the degree of the interstitial point to the external device such as an autonomous vehicle. In such a case, the autonomous vehicle can ignore this point cloud, and instead use data detected by other sensors on the autonomous vehicle such as binocular vision sensors, infrared sensors, and ultrasonic sensors, to assist decision-making for autonomous driving, thereby controlling the autonomous vehicle better.

Based on a preferred embodiment of this disclosure, the processor unit 303 can be built in the LiDAR. Referring to Fig. 6, each LiDAR can be carried with its own data of the degree of the interstitial point as one of the parameters of the LiDAR before leaving a factory, which the parameter itself represents the performance of the LiDAR, providing users with a choice basis for purchasing the LiDAR, which is simple, intuitive, and very convenient and is conducive to improving customer experience. In addition, based on an embodiment of this disclosure, the processor unit 303 can also be placed outside the LiDAR, and a specific position of the processor unit 303 relative to the LiDAR is not limited in this disclosure.

This disclosure further provides a computer-readable storage medium including computer-executable instructions stored thereon, where when the computer-executable instructions are executed by a processor, the method 100 as described above is implemented.

By using technical solutions of this disclosure, the degree of the interstitial point of the LiDAR produced by any manufacturer can be evaluated very simply and intuitively to evaluate the confidence of the point cloud of the LiDAR, and then to evaluate the performance of the LiDAR, thereby assisting the external device in determining the use of the point cloud data, which facilitates improving of the customer experience and standardizing development of LiDAR industry.

It should be finally noted that the above are merely preferred embodiments of this disclosure, and are not intended to limit this disclosure. Although this disclosure has been described in detail with reference to the foregoing embodiments, those skilled in the art can still modify the technical solutions described in the foregoing embodiments or equivalently replace some of the technical features. Any modifications, equivalents, improvements, or the like, made within the spirit and principle of this disclosure should fall within the protection scope of this disclosure.

## Claims

1. A method for evaluating degree of interstitial point of point cloud of a LiDAR, comprising:
S101: building a tester apparatus, wherein the tester apparatus comprises a base, a first target object, and a second target object, and distance between the first target object and the base is different from distance between the second target object and the base;
S102: mounting the LiDAR on the base, to cause that a beam of light emitted by a laser of a channel to be evaluated of the LiDAR at a predetermined orientation can be incident to the first target object and to the second target object successively;
S103: emitting detection pulses to the first target object and the second target object of the tester apparatus through the LiDAR;
S104: receiving echo pulses generated by reflection of the detection pulses by the first target object and the second target object, and generating the point cloud based on the echo pulses;
S105: determining whether an interstitial point exists in the point cloud; and
S106: increasing the distance between the first target object and the second target object when the interstitial point exists in the point cloud.

2. The method based on claim 1, further comprising: repeating the steps S103 to S106 until no interstitial point exists in the point cloud, and recording the distance between the first target object and the second target object at this time to characterize the degree of the interstitial point of the point cloud of the LiDAR,
wherein the step S102 comprises: changing distance between the first target object and the base, distance between the second target object and the base, orientation of the first target object to the base, and orientation of the second target object to the base, to cause that the echo pulses generated by reflection of the beam of light by the first target object and the second target object are received by a detector of the channel to be evaluated.

3. The method based on claim 1, further comprising: repeating the steps S103 to S106 until no interstitial point exists in the point cloud; and characterizing the degree of the interstitial point of the point cloud of the LiDAR by a curve of the number of interstitial points relative to the distance between the first target object and the second target object.

4. The method based on claim 1, wherein the step S101 further comprises: placing the first target object at a first distance to the base and placing the second target object at a second distance to the base, to cause that the first target object and the second target object partially overlap when viewed at a perspective from the LiDAR, wherein the first target object and the second target object are provided to cover a vertical field of view of the LiDAR.

5. The method based on claim 4, wherein the first target object and the second target object are Lambertian with same reflectivity, and wherein the first target object and the second target object both have straight edges, and the first target object and the second target object are provided to cause a beam of laser emitted by the LiDAR to be substantially vertically incident to a position near an edge.

6. The method based on claim 4, wherein the step S103 further comprises: emitting, a detection pulse directly to an edge of the first target object, by the LiDAR, to cause one part of the emitted light to be incident to the first target object and another part of the emitted light to be incident to the second target object.

7. The method based on claim 6, wherein the step S105 further comprises: displaying the point cloud through a point cloud visualization device to determine whether the interstitial point exists between the first target object and the second target object in the point cloud.

8. The method based on any one of claims 1 to 7, wherein the first target object and the second target object are separated by predetermined distance, and wherein the first target object and the second target object are configured to be at initial positions where the interstitial point exists in the point cloud, and the step S106 comprises: moving the second target object away from the base when it is determined that the interstitial point exists in the point cloud.

9. The method based on any one of claims 1 to 7, further comprising: changing reflectivity of at least one of the first target object or the second target object, and repeating the steps S103 to S106.

10. The method based on any one of claims 1 to 7, wherein when no interstitial point exists in the point cloud, the distance between the first target object and the second target object is related to pulse width of the detection pulse emitted by the LiDAR, and the distance is not less than 100 cm.

11. The method based on claim 10, further comprising: determining that the degree of the interstitial point in the point cloud is high, when the distance between the first target object and the second target object is greater than a first predetermined distance when no interstitial point exists in the point cloud.

12. The method based on any one of claims 1 to 7, further comprising: drawing a curve graph of the number of interstitial points based on change in the distance between the first target object and the second target object.

13. A tester apparatus for evaluating a degree of an interstitial point of point cloud of a LiDAR, comprising:
a base, configured to install the LiDAR thereon;
a first target object, vertically placed at a first distance from the base; and
a second target object, vertically placed at a second distance from the base, wherein the second distance is greater than the first distance, and
wherein the first object and the second object partially overlap when viewed from the LiDAR towards the first target object and the second target object.

14. The tester apparatus based on claim 13, further comprising: a point cloud visualization device, configured to communicate with the LiDAR to display the point cloud.

15. The tester apparatus based on claim 13 or 14, further comprising a controller unit, configured to control positions of the first target object and the second target object, to change the distance between the first target object and the second target object, based on whether an interstitial point exists in the point cloud or based on a user input.

16. The tester apparatus based on claim 13 or 14, further comprising: a first guide rail and a second guide rail, wherein the first target object is slidably provided on the first guide rail and the second target object is slidably provided on the second guide rail.

17. The tester apparatus based on claim 13 or 14, wherein distance between the first target object and the base, distance between the second target object and the base, orientation of the first target object to the base, and orientation of the second target object to the base, are provided to cause that echo pulses generated by reflection of detection pulses emitted from a laser emitter of the LiDAR by the first target object and the second target object are received by a same detector of the LiDAR.

18. The tester apparatus based on claim 13 or 14, wherein the first target object and the second target object have straight edges, and the first target object and the second target object are provided so that a horizontal detection pulse emitted by the LiDAR is substantially vertically incident to a position near an edge, and the first target object and the second target object are provided to cover a vertical field of view of the LiDAR.

19. A LiDAR, comprising:
an emitter unit comprising a plurality of lasers, configured to emit a detection pulse;
a receiver unit comprising a plurality of detectors, configured to receive an echo pulse generated by reflection of the detection pulse incident to an obstacle, where at least one laser and at least one detector form a detection channel, all of a plurality of lasers and a plurality of detectors form a plurality of detection channels, and a laser and a detector in a same detection channel overlap at least partially in a field of view; and
a processor unit, configured to generate point cloud data based on the echo pulse of each detection channel, and evaluate a degree of the interstitial point of the point cloud data with the detection channel as a unit, wherein an interstitial point is a non-existent point formed between front and rear real obstacles, and the degree of the interstitial point is characterized using interstitial point disappearance distance.

20. The LiDAR based on claim 19, wherein the interstitial point disappearance distance is related to pulse width of the detection pulse emitted by the LiDAR, and the interstitial point disappearance distance is not less than 100 cm.

21. The LiDAR based on claim 19 or 20, wherein the processor unit is further configured to package the degree of the interstitial point to the point cloud data, then output the degree of the interstitial point to an external device to assist the external device in determining quality of the point cloud data, and the external device comprises a vehicle.

22. The LiDAR based on claim 19 or 20, wherein the processor unit is further configured to evaluate a confidence of the point cloud data based on the degree of the interstitial point, then output the confidence to the external device to assist the external device in determining use of the point cloud data, and the external device comprises the vehicle.

23. A computer-readable storage medium, comprising computer-executable instructions stored thereon which, when executed by a processor, the method of any one of claims 1 to 12 is implemented.
